Europäisches Patentamt

European Patent Office

Office européen des brevets

(11) Veröffentlichungsnummer: **0 257 249**

**A1**

(12) **EUROPÄISCHE PATENTANMELDUNG**

(21) Anmeldenummer: **87109610.3**

(22) Anmeldetag: **03.07.87**

(51) Int. Cl.4: **F16H 25/22**

(30) Priorität: **25.08.86 DE 3628802**

(43) Veröffentlichungstag der Anmeldung:
**02.03.88 Patentblatt 88/09**

(84) Benannte Vertragsstaaten:
**AT BE CH DE ES FR GB GR IT LI LU NL SE**

(71) Anmelder: **Friedrich Deckel
Aktiengesellschaft
Plinganserstrasse 150
D-8000 München 70(DE)**

(72) Erfinder: **Adels, Willi
Ludwig-Braille-Strasse 2
D-8000 München 70(DE)**

(54) **Kugelrückführung.**

(57) Bei einer Spindelmutter (108) mit ihrer Kugelrückführung für einen Kugelgewindetrieb sind die Rückführkanäle jeweils in gesonderten Einsätzen ausgebildet, die in eine an der Innenseite der Spindelmutter (108) ausgebildete Ausnehmung eingesetzt werden. Die Ausnehmungen sind bei einem Ausführungsbeispiel der Erfindung als zur Spindelmutterachse parallele, die Spindelmutter (108) vorzugsweise auf ihrer gesamten Länge durchsetzende, etwa trogartige Vertiefungen ausgebildet, wobei die Rückführeinsätze eine dieser Vertiefung entsprechende Querschnittsform haben. Diese Vertiefung ist in sehr einfacher Weise durch eine Bohr-und Drehoperation durchführbar.

In einem anderen Ausführungsbeispiel ist am Auslaufende bzw. Einlaufende eines Kugelkanals je ein Rückführeinsatz (66, 72) angeordnet, der als die Spindelmutterwand (50) radial durchsetzender Pfropfen ausgebildet ist. An der radial inneren Seite dieses Pfropfens sind die Überleitungskanalabschnitte (78, 80) ausgebildet. Die Pfropfen sitzen in die Spindelmutterwand radial durchsetzenden Bohrungen (82, 84).

FIG. 13

FIG. 10

## Kugelrückführung

Die Erfindung betrifft eine Spindelmutter der im Oberbegriff des Anspruches 1 genannten Art.

Bei Kugelgewindetrieben werden Spindelmuttern mit innerer Kugelrückführung bzw. mit äußerer Kugelrückführung unterschieden. Bei der äußeren Kugelrückführung liegen die Rückführkanäle im wesentlichen außerhalb der Spindelmutter, wobei am vorderen und hinteren Ende der Rückführkanäle relativ einfache, die Spindelmutter durchsetzende Anschlußkanäle vorgesehen sind. Bei der inneren Kugelrückführung verlaufen die Rückführkanäle in der Innenfläche der Spindelmuttern. Die Rückführkanäle sind im allgemeinen in Rückführeinsätzen ausgebildet, die jeweils in der Form dieser Rückführeinsätze entsprechenden Ausnehmungen in der Innenfläche der Spindelmutter angeordnet sind. Da die Rückführeinsätze mit ihren in die Kugelkanäle der Spindel überleitenden Übergangsabschnitten relativ kompliziert geformte Bauteile darstellen, haben auch die Ausnehmungen eine komplizierte Form, deren Herstellung in der Innenfläche der Spindelmuttern große Schwierigkeiten bereiten.

Es ist die Aufgabe der vorliegenden Erfindung, eine Spindelmutter der im Oberbegriff des Anspruches 1 genannten Art zu schaffen, welche herstellungstechnisch wesentlich einfacher als die bekannten Spindelmuttern sind.

Diese Aufgabe ist erfindungsgemäß durch die im Kennzeichen des Anspruches 1 enthaltenen Merkmale gelöst.

Die Ausnehmung zur Aufnahme des Rückführeinsatzes ist als zur Spindelmutterachse parallele, die Spindelmutter wenigstens auf einem Teil ihrer axialen Länge durchsetzende, etwa trogförmige Vertiefung ausgebildet; der Rückführeinsatz ist als der Form dieser Vertiefung entsprechend geformter Riegel ausgebildet, in dessen Oberfläche wenigstens ein Rückführkanal mit einer den Durchmesser der Kugeln entsprechenden Kanaltiefe angeordnet ist. Die zur Spindelmutterachse parallele Vertiefung kann in sehr einfacher Weise z.B. durch eine Dreh-oder Fräsoperation ausgeführt werden. Der Rückführeinsatz hat ebenfalls eine sehr einfache Form, so daß auch dessen Herstellung keine Schwierigkeiten bereitet. Der oder die Rückführkanäle sind in der Oberfläche des Riegels ausgebildet, bilden also nichtgeschlossene Kanäle. Je nachdem, ob die Rückführkanäle an der der Spindel zugewandten inneren oder der der Spindelmutter zugewandten äußeren Fläche des Riegels ausgebildet sind, werden sie entweder durch die Spindel oder durch die Spindelmutter zu geschlossenen Kanälen ergänzt.

In einer Ausgestaltung der Erfindung ist vorgesehen, daß die Ausnehmung die Spindelmutter auf ihrer ganzen axialen Länge durchsetzt. Eine derartige Ausbildung ist herstellungstechnisch besonders einfach.

In weiterer Ausgestaltung der Erfindung ist vorgesehen, daß der Rückführeinsatz einen kreisabschnittförmigen Querschnitt mit einer stärker gekrümmten äußeren Fläche und einer schwächer gekrümmten inneren Fläche (entsprechend der Krimmung der Spindeloberfläche) aufweist. Zur Montage wird dieser Riegel einfach in die Ausnehmung eingelegt und auf beliebige, geeignete Weise in der Spindelmutter befestigt.

In bevorzugter Ausgestaltung der Erfindung sind die Rückführkanäle auf der radial äußeren Seite des Einsatzes ausgebildet. Diese Lösung ist vor allem auch für mehrgängige Kugelgewindetriebe verwendbar, bei denen die Kugelrückführkanäle unter Umständen über mehrere Gewindegänge hinwegführen.

Um die Überleitung der Kugel von der Spindel in die Rückführkanäle zu verbessern und/oder den Rückführeinsatz zu verstärken, ist erfindungsgemäß vorgesehen, daß auf der radial inneren Seite des Rückführeinsatzes in die von dem Einsatz überdeckten Kugelkanäle der Spindel eingreifende, diesen Kugelkanälen entsprechend geformte Wülste ausgebildet sind.

Die beschriebene Ausführungsform eignet sich vorwiegend für Kugelgewindetriebe, bei denen jeder tragende Kanal zwischen Kugeleinlauf und Kugelauslauf höchstens einen Umlauf macht. Es können jedoch ohne weiteres mehrere parallele Kugelkanäle vorgesehen sein.

Bei Spindelmuttern gemäß dem Oberbegriff des Anspruches 1, bei denen jeder tragende Kugelkanal mehrere Umläufe macht, ist es erforderlich, einen Rückführkanal vorzusehen, welcher die tragenden Kanäle nicht schneidet. Ein solcher Rückführkanal ist im allgemeinen an der Innenseite der Spindelmutter so ausgebildet, daß er jeweils mit einer der Steigung der tragenden Kanäle entsprechenden Steigung gegenläufig zwischen diesen angeordnet ist. In diesem Fall sind nur Übergangsstücke von den tragenden Kugelkanälen zu den Rückführkanälen erforderlich. Diese sind erfindungsgemäß entsprechend dem Kennzeichen des Anspruches 8 ausgebildet.

Radial die Spindelmutterwand durchdringende Bohrungen sind ebenfalls durch sehr einfache Arbeitsoperationen herstellbar, ebenso wie die zylindrischen Pfropfen. Auf diese Weise gelingt es, die Herstellungen der Spindelmuttern gegenüber bekannten Spindelmuttern erheblich zu vereinfachen.

In weiterer Ausgestaltung der Erfindung ist vorgesehen, daß die Rückführeinsätze jeweils aus Kunststoff bestehen und beispielsweise als Kunststoffspritzteile ausgebildet sind.

Mehrere Ausführungsbeispiele der Erfindung sind in der Zeichnung dargestellt und im folgenden näher beschrieben. Es zeigen:

Fig. 1 in schematischer Darstellung eine perspektivische Ansicht einer Spindel und einer Spindelmutter mit Rückführeinsatz;

Fig. 2 eine Spindelmutter gemäß Fig. 1 in einem Querschnitt;

Fig. 3 bis 5 einen Rückführeinsatz etwa gemäß Fig. 1 in verschiedenen Ansichten;

Fig. 6 bis 8 ein anderes Ausführungsbeispiel eines Rückführeinsatzes in verschiedenen Ansichten;

Fig. 9 einen Querschnitt durch eine Spindel und eine Spindelmutter mit Rückführeinsätzen entsprechend einem anderen Ausführungsbeispiel;

Fig. 10 einen Schnitt durch die Spindelmutter gemäß Fig. 9 entsprechend der Linie X-X;

Fig. 11 einen Querschnitt durch eine Anordnung gemäß Fig. 9 entlang der Linie XI-XI;

Fig. 12 ein anderes Ausführungsbeispiel mit zwei in den Endbereichen der Spindelmutter angeordneten Rückführeinsätzen;

Fig. 13 eine Ansicht eines Rückführeinsatzes entsprechend der Linie XIII-XIII in Fig. 12.

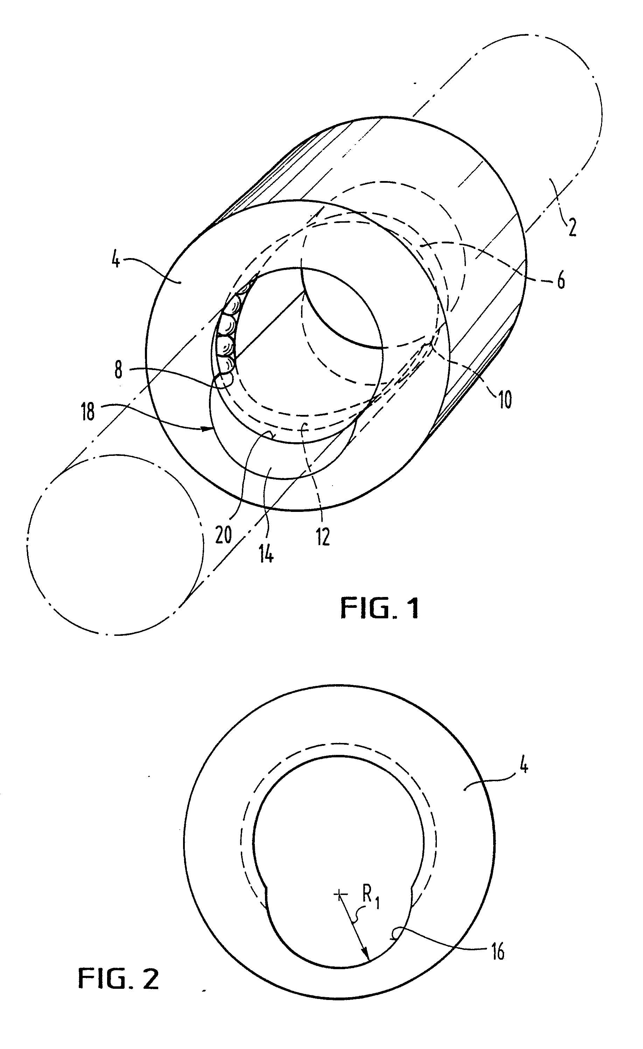

Figur 1 zeigt schematisch eine Spindel 2 sowie eine Spindelmutter 4 eines Kugelgewindetriebes. Die Spindelmutter 4 ist mit einem Kugel-Halbkanal 6 versehen, welcher in bekannter Weise durch einen in der Spindel 2 ausgebildeten, hier nicht dargestellten komplementären Kugelhalbkanal zu einem tragenden Kugelkanal ergänzt wird. Wie Figur 1 erkennen läßt, macht der Kugelhalbkanal 6 etwas weniger als einen vollständigen Umlauf zwischen dem Einlaufende 8 und dem Auslaufende 10 des Kugelhalbkanals 6 und damit des tragenden Kugelkanals. Nach Durchlaufen des tragenden Kugelkanals werden die Kugeln über einen Rückführkanal 12 vom Auslaufende 10 zum Einlaufende 8 zurückgeführt. Dieser Rückführkanal 12 ist in einem Rückführeinsatz 14 ausgebildet, welcher im folgenden näher beschrieben wird.

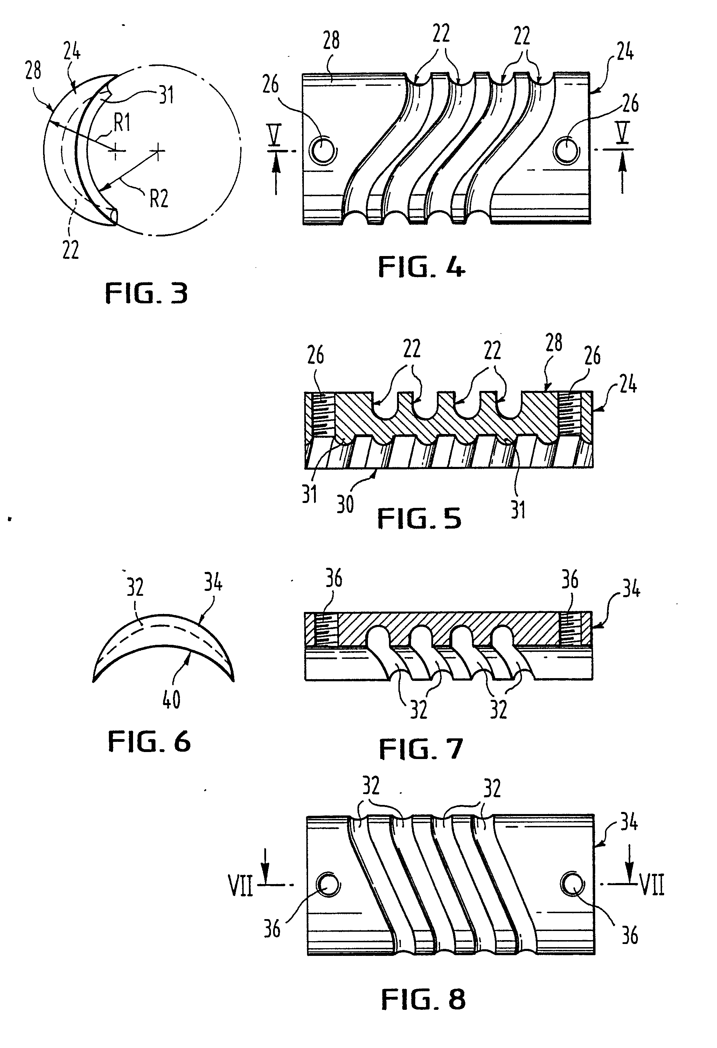

Wie Figur 2 zeigt, ist an der Innenseite der Spindelmutter 4 eine etwa trogartige Vertiefung ausgebildet, die als Ausnehmung 16 zur Aufnahme des Rückführeinsatzes 14 dient. Diese Vertiefung verläuft parallel zur Spindelmutterachse und durchsetzt die Spindelmutter auf ihrer ganzen Länge. Sie hat einen etwa kreissegmentförmigen Querschnitt und kann deshalb in einfacher Weise etwa durch eine Fräs-oder Drehoperation ausgeführt werden. Der Rückführeinsatz 14 hat eine der Ausnehmung 16 entsprechende Form, d.h. die radial äußere Seite 18 ist durch ein Segment einer Kreiszylindermantelfläche mit dem Radius $R_1$, die radial innere Seite 20 durch ein Segment einer kreiszylindrischen Mantelfläche mit dem Radius $R_2$ (siehe Figur 3) gebildet. Der Rückführkanal 12 kann in der radial äußeren Seite 18, im Beispiel der Figur 1 aber auch in der radial inneren Seite 20 ausgebildet sein, da er keine tragenden Kugelkanäle kreuzt.

Die Figuren 3 bis 5 zeigen einen Rückführeinsatz 24 etwa der in Figur 1 dargestellten Art, wobei auf der radial äußeren Seite 28 vier zueinander parallele Rückführleitungen 22 angeordnet sind. Diese Rückführkanäle 22 verbinden jeweils die Einlauf-und Auslaufenden von vier zueinander parallelen, in einer Spindel bzw. einer Spindelmutter ausgebildeten tragenden Kugelkanälen. Die Rückführkanäle 22 haben eine Tiefe, die mindestens einem Kugeldurchmesser entspricht. Nach dem Einlegen des Rückführeinsatzes 24 in die Ausnehmung 16 der Spindelmutter 4 sind die Rückführkanäle 22 allseitig geschlossen, so daß die Kugeln in ihnen sicher geführt werden. An den Enden des Rückführeinsatzes 24 ist je eine Bohrung 26 zur Aufnahme einer nicht dargestellten Schraube vorgesehen, mittels derer der Rückführeinsatz 24 in der Spindelhülse 4 befestigt wird. An der radial inneren Seite 30 sind Wülste 31 mit jeweils kreissegmentförmigem Querschnitt ausgebildet, deren Verlauf dem der Kugelhalbkanäle in der Spindel entspricht, in die sie eingreifen. Diese Wülste 31 versperren die Kugelhalbkanäle der Spindel und erleichtern durch zweckmäßige Formgebung an ihrer Stirnseite den Übertritt der Kugeln von den tragenden Kugelkanälen in die Rückführkanäle.

Die Figuren 6 bis 8 zeigen einen Rückführeinsatz 34, bei welchem die Rückführkanäle 32 an der radial inneren Seite 40 ausgebildet sind. Es sind wiederum vier zueinander parallele Rückführkanäle 32 vorgesehen, die jeweils die Auslauf-bzw. Einlaufenden von vier parallelen tragenden Kugelkanälen verbinden. Die Bohrungen 36 dienen wiederum zur Aufnahme von Befestigungsschrauben.

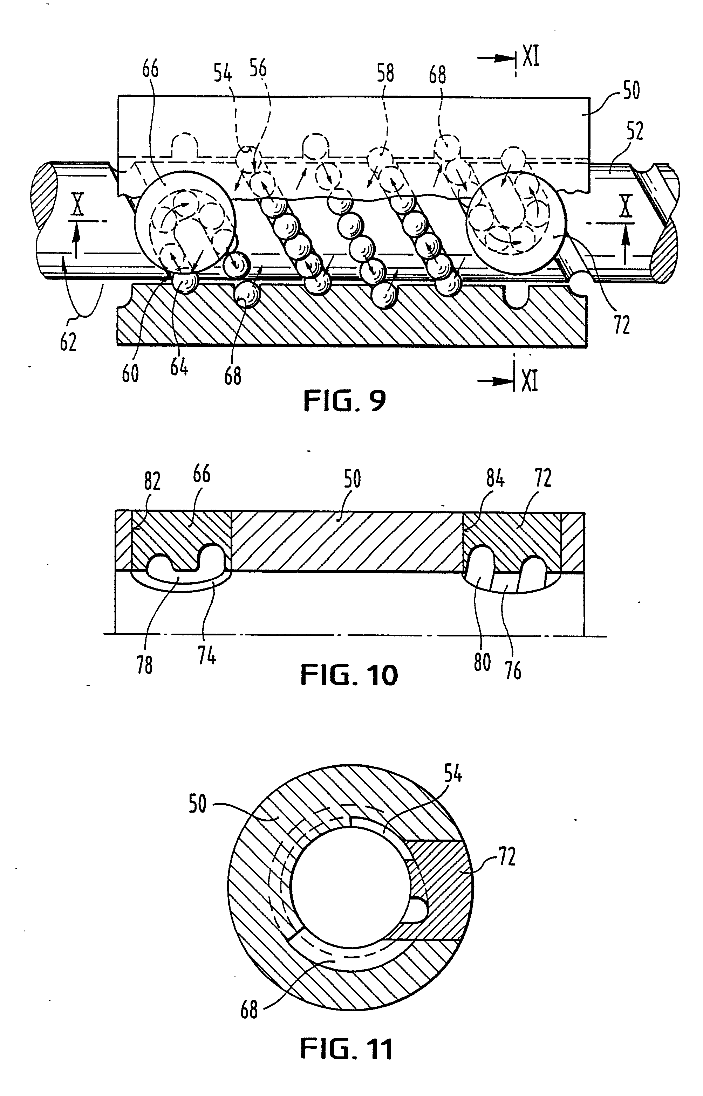

Die Figuren 9 und 10 zeigen ein Ausführungsbeispiel einer Spindelmutter 44, 50, die mit einer Spindel 52 zusammenwirkt. In der Spindelmutter 50 bzw. der Spindel 52 sind jeweils Kugelhalbkanäle 54 bzw. 56 ausgebildet, welche in bekannter Weise einen mehrgängigen, tragenden Kugelkanal 58 bilden. Da es sich um einen mehrgängigen Kugelkanal handelt, muß die Rückführung so angeordnet sein, daß sie diesen tragenden Kugelkanal nicht kreuzt. Am Auslaufende 60 (bei einer Drehrichtung entsprechend dem Pfeil 62) werden die Kugeln 64 von einem Rückführeinsatz 66 übernommen und in einen Rückführkanal 68 geführt, welcher jeweils zwischen den Kugelhalbkanälen 54 der Spindelmutter 50 und gegenläufig zu diesen in der Innenseite der Spindelmutter 50 ausgebildet ist. Am Einlaufende 70 des tragenden Kugelkanals 58 ist ein ähnlicher Rückführeinsatz 72 angeordnet, welcher die Kugeln 64 aus dem Rückführkanal 68 in den tragenden Kugelkanal 58 zurückführt.

Die Rückführeinsätze 66 bzw. 72 sind jeweils als zylindrische Pfropfen ausgebildet, deren radial innere Stirnseite 74, 76 jeweils der inneren Zylinderform der Spindelmutter 50 entsprechend geformt ist; in dieser inneren Stirnseite 74, 76 sind jeweils Rückführkanäle 78, 80 ausgebildet, welche jeweils eine Verbindung zwischen dem tragenden Kugelkanal 58 und dem Rückführkanal 68 herstellen. Die Rückführeinsätze 66, 72 sind jeweils in die Wand der Spindelmutter 50 radial durchdringenden Bohrungen 82, 84 angeordnet. Diese Bohrungen 82, 84 sind ebenfalls sehr einfach durch eine Bohroperation herstellbar. Auch die Herstellung der Rückführeinsätze 66, 72 ist technologisch sehr einfach.

Die Rückführeinsätze 14, 24, 34 sowie 66 und 72 sind vorzugsweise aus Kunststoff ausgebildet und können beispielsweise als Kunststoffspritzteile hergestellt sein.

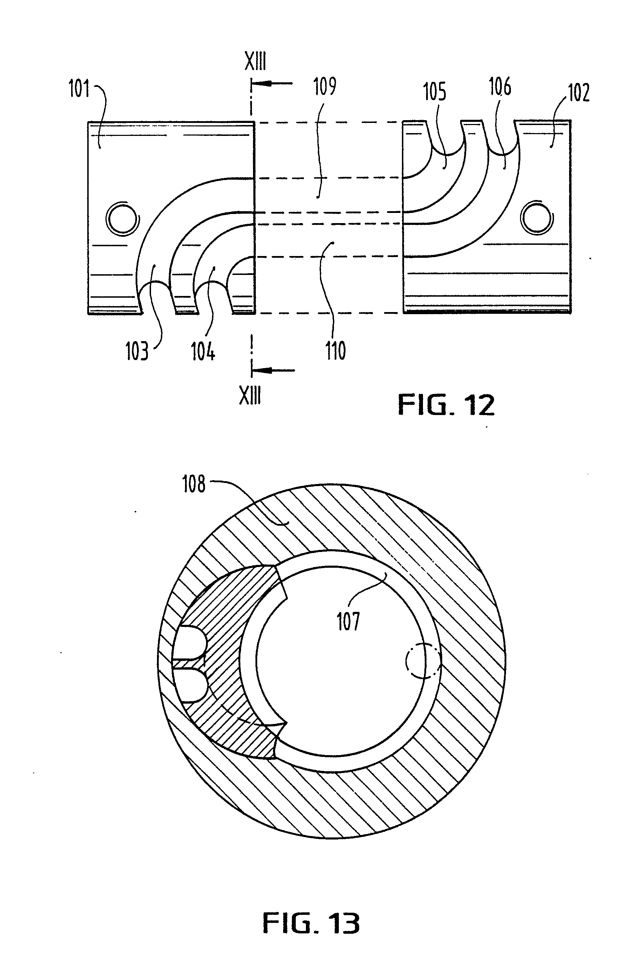

Fig. 12 zeigt schematisch eine Anordnung, bei der in den beiden Endbereichen einer nicht dargestellten Spindelmutter je ein Rückführeinsatz 101, 102 angeordnet ist, welche eine Querschnittsform etwa gemäß den Beispielen in den Figuren 1 bis 8 haben. Jeder Rückführeinsatz 101, 102 im dargestellten Beispiel weist zwei parallel verlaufende Rückführkanalabschnitte 103, 104 bzw. 105, 106 auf, die jeweils einerseits an einen tragenden Kugelkanal 107 des Spindel/Muttersystems (siehe Fig. 13) und andererseits an einen im Spindelmutterkörper 108 ausgebildeten mittleren Rückführkanal 109, 110 angeschlossen sind, so daß je zwei in den Rückführeinsätzen 101, 102 ausgebildete Kanalabschnitte, z.B. die Abschnitte 103 und 105, durch einen im Mutternkörper 108 ausgebildeten Abschnitt 109 miteinander verbunden sind und einen vollständigen Rückführkanal bilden.

## Ansprüche

1. Spindelmutter mit innerer Kugelrückführung für einen Kugelgewindetrieb, wobei die beiden Enden jedes tragenden Kugelkanals der Spindelmutter über einen Rückführkanal miteinander verbunden sind, welcher wenigstens teilweise in einem Rückführeinsatz ausgebildet ist, der in einer der Form des Rückführeinsatzes entsprechenden Ausnehmung in der Innenfläche der Spindelmutter angeordnet ist, dadurch **gekennzeichnet,** daß die Ausnehmung (16) als zur Spindelmutterachse parallele, die Spindelmutter (4) wenigstens auf einem Teil ihrer axialen Länge durchsetzende, etwa trogartige Vertiefung ausgebildet ist und daß der Rückführeinsatz (14, 24, 34) als der Form der Vertiefung entsprechend geformter Riegel ausgebildet ist, in dessen Oberfläche wenigstens ein Rückführkanalabschnitt (12, 22, 32) mit einer dem Durchmesser der Kugeln entsprechenden Kanaltiefe ausgebildet ist.

2. Spindelmutter nach Anspruch 1, dadurch **gekennzeichnet,** daß die Ausnehmung (16) die Spindelmutter (4) auf ihrer ganzen axialen Länge durchsetzt, wobei der Riegel (14) eine der Länge der Ausnehmung (16) entsprechende Länge hat.

3. Spindelmutter nach einem der Ansprüche 1 und 2, dadurch **gekennzeichnet,** daß die Ausnehmung (16) einen kreisabschnittförmigen Querschnitt aufweist.

4. Spindelmutter nach einem der Ansprüche 1 bis 3, dadurch **gekennzeichnet,** daß die Rückführkanäle (22) auf der radial äußeren Seite (28) des Rückführeinsatzes (24) ausgebildet sind.

5. Spindelmutter nach Anspruch 4, dadurch **gekennzeichnet,** daß auf der radial inneren Seite (30) des Rückführeinsatzes (24) in die von dem Einsatz überdeckten Kugelkanäle der Spindel (2) eingreifende, diesen Kugelkanälen entsprechend geformte Wülste (31) ausgebildet sind.

6. Spindelmutter nach einem der Ansprüche 1 bis 5, dadurch **gekennzeichnet,** daß der Einsatz (14) nur einen Rückführkanal (12) aufweist.

7. Spindelmutter nach einem der Ansprüche 1 bis 4, dadurch **gekennzeichnet,** daß die Rückführkanäle (32) auf der radial inneren Seite (40) des Rückführeinsatzes (34) ausgebildet sind.

8. Spindelmutter nach dem Oberbegriff des Anspruches 1, dadurch **gekennzeichnet,** daß die Ausnehmung als radial die Spindelmutterwand durchdringende Bohrung ausgebildet ist und daß der Einsatz als zylindrischer Pfropfen ausgebildet ist, dessen innere Stirnseite der inneren Zylinderform der Spindelmutter entsprechend geformt ist, und daß in dieser Stirnseite Rückführungskanäle ausgebildet sind, die an gesonderte Rückführungskanäle in der Spindelmutter mit zu den tragenden Kanälen gegenläufiger Bahn Anschluß haben.

9. Spindelmutter nach einem der Ansprüche 1 bis 8, dadurch **gekennzeichnet,** daß die Einsätze aus Kunststoff bestehen.

10. Spindelmutter nach Anspruch 9, dadurch **gekennzeichnet** daß die Einsätze als Kunststoffspritzteile ausgebildet sind.

11. Spindelmutter nach einem der Ansprüche 1, 3 bis 5, 9 und 10, dadurch **gekennzeichnet**, daß jeweils eine Ausnehmung in den beiden Endbereichen der Spindelmutter (108) ausgebildet ist, daß in jeder Ausnehmung ein Rückführeinsatz (101, 102) angeordnet ist, und daß in jedem Rückführeinsatz (101, 102) wenigstens ein Rückführkanalabschnitt (103, 104, 105, 106) ausgebildet ist, welcher einerseits mit dem Ende eines tragenden Kugelkanals (107), andererseits mit einem im Spindelmutterkörper (108) ausgebildeten mittleren Rückführkanalabschnitt (109, 110) verbunden ist.

FIG. 1

FIG. 2

FIG. 3

FIG. 4

FIG. 5

FIG. 6

FIG. 7

FIG. 8

0 257 249

FIG. 9

FIG. 10

FIG. 11

FIG. 12

FIG. 13

**Europäisches Patentamt**

# EUROPÄISCHER RECHERCHENBERICHT

## EINSCHLÄGIGE DOKUMENTE

EP 87109610.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 3 244 508 (MANNESMANN) <br> * Gesamt * <br> -- | 1-7 | F 16 H 25/22 |
| X | US - A - 3 327 551 (GENERAL MOTORS) <br> * Gesamt * <br> -- | 1,2 | |
| A | DE - A1 - 2 451 585 (SKF) <br> * Gesamt * <br> -- | 1,8-11 | |
| A | CH - B - 510 830 (ROTAX) <br> -- | | |
| A | GB - B - 143 594 (RAPSEN) <br> ---- | | |

### RECHERCHIERTE SACHGEBIETE (Int. Cl.4)

F 16 H 25/00

Der vorliegende Recherchenbericht wurde für alle Patentansprüche erstellt.

| Recherchenort | Abschlußdatum der Recherche | Prüfer |
|---|---|---|
| WIEN | 30-11-1987 | HEMMELMEIER |